# EUROPEAN PATENT SPECIFICATION

(11) **EP 3 227 536 B1**
(45) Date of publication and mention of the grant of the patent: **08.01.2020**
(21) Application number: 15866331.0
(22) Date of filing: 04.11.2015
(51) Int. Cl.: F01K 23/06, F01K 9/00, F02G 5/04, F01K 23/10

(54) **A COOLING ARRANGEMENT FOR A WHR-SYSTEM**
KÜHLANORDNUNG FÜR EIN WHR-SYSTEM
SYSTÈME DE REFROIDISSEMENT POUR UN SYSTÈME DE RÉCUPÉRATION DE CHALEUR PERDUE

(30) Priority: 05.12.2014 SE 1451488
(43) Date of publication of application: 11.10.2017
(73) Proprietor: Scania CV AB, 151 87 Södertälje (SE)
(72) Inventor: KARDOS, Zoltan, S-151 35 Södertälje (SE); HALL, Ola, S-117 67 Stockholm (SE)
(74) Representative: Scania CV AB
(86) International application number: PCT/SE2015/051166
(87) International publication number: WO 2016/089276

(56) References cited:
- EP-A1- 2 789 811
- WO-A1-2011/149409
- DE-A1- 19 854 544
- DE-A1-102010 003 906
- US-A1- 2011 048 012
- US-A1- 2012 198 840
- US-A1- 2013 068 202
- US-A1- 2013 199 178
- US-A1- 2013 312 418
- US-A1- 2014 007 575

## Description

### BACKGROUND OF THE INVENTION AND PRIOR ART

The present invention relates to a cooling arrangement for a WHR- system according to the preamble of claim 1.

WHR system (Waste Heat Recovery System) can be used in vehicles for recovering waste thermal energy and convert it to mechanical energy or electric energy. A WHR system includes a pump which pressurizes and circulates a working medium in a closed circuit. The circuit comprises one or several evaporators where the working medium is heated and evaporated by one or several heat sources such as, for example, the exhaust gases from a combustion engine. The pressurized and heated gaseous working medium is directed to an expander where it expands. The expander generates mechanical energy which can be used to operate the vehicle or apparatuses on the vehicle. Alternatively, the expander is connected to a generator generating electric energy. The working medium leaving the expander is directed to a condenser. The working medium is cooled down in the condenser to a temperature where it condenses. The liquefied working medium is redirected to the pump which pressurizes the medium. Thus, the waste heat energy from, for example, the exhaust gases from a combustion engine in a vehicle can be recovered by means of a WHR-system. Consequently, a WHR-system can reduce fuel consumption in a vehicle.

In order to achieve a high thermal efficiency in a WHR-system, the working medium in the condenser is to be cooled to a condensation temperature as low as possible and substantially without subcooling. Consequently, in order to achieve a high thermal efficiency in a WHR-system, the working medium has to be cooled with a suitable cooling effect. However, the suitable cooling effect of the working medium in the condenser varies during different operating conditions such as with the heat effect supplied from, for example, the exhaust gases to the evaporator. Since the supplied heat from exhaust gases can vary rapidly, it is difficult to continuously provide a suitable cooling effect and a high thermal efficiency of a WHR-system.

US 2013/0118423 shows a cooling circuit with a circulating coolant which cools a motor. The cooling circuit comprises a cooling line where the coolant cools a working medium in a condenser of a WHR-system and a bypass line leading the medium past the condenser. The coolant flow through the bypass line is controlled by a relief valve which open at a specific pressure.

US 2013068202 A1 relates to a cooler arrangement for a vehicle which is powered by a supercharged combustion engine. The vehicle comprises at least one charge air cooler for cooling of compressed air which is led to the combustion engine and an energy recovery system. The vehicle comprises also a cooler arrangement comprising a first cooling circuit with a first cooler adapted to cooling a circulating coolant, a second cooling circuit with a second cooler adapted to cooling a circulating coolant to a lower temperature than the temperature to which the coolant is cooled in the first cooler, and a third cooling circuit with a third cooler adapted to cooling a circulating coolant to a lower temperature than the temperature to which the coolant is cooled in the second cooler. The coolant which has been cooled in the third cooling circuit is used to cool the compressed air in the charge air cooler and/or the medium in the condenser.

### SUMMARY OF THE INVENTION

The object of the present invention is to provide a cooling arrangement which is able to provide a cooling effect of a working medium in a condenser of a WHR-system in a manner such that the WHR-system substantially continuously operates with a high thermal efficiency.

The above mentioned object is achieved by the cooling arrangement according to the characterised part of claim 1. In order to continuously maintain a high thermal efficiency in a WHR-system, it is necessary to adjust the cooling effect of the working medium in the condenser during different operating conditions. The cooling arrangement comprises three different cooling circuits provided with coolants of three different temperatures. The coolant in the second cooling circuit with the intermediate coolant temperature is directed to the condenser. The cooling arrangement comprises a control unit receiving substantially continuously information from a sensor about a parameter related to the cooling of the working medium in the condenser. In case the parameter indicates that coolant in the second cooling circuits provides a too low cooling of the working medium in the condenser, the control unit controls the cooling adjusting means such that coolant in the second cooling circuit is cooled by the coolant in the third cooling circuit to a suitable lower temperature before it enters the condenser. In case the parameter indicates that coolant in the second cooling circuits provides a too high cooling of the working medium in the condenser, the control unit controls the cooling adjusting means such that coolant in the second cooling circuit is heated by the coolant in the first cooling circuit to a suitable higher temperature before it enters the condenser. An alternative to change the temperature of the coolant entering the condenser, it is to adjust the coolant flow to the condenser. The cooling effect of the working medium in the condenser is related to the temperature and the flow of the coolant. By means of said cooling adjusting means it is possible to adjust the temperature and/or the flow of the coolant in the second cooling circuit to the condenser. Such an adjustment of the temperature and the flow of the coolant directed to the condenser can be provided in a quick manner. As a result, it is possible to obtain a substantially continuously high thermal efficiency of the WHR-system during operation.

According to an embodiment of the invention, said cooling adjusting means comprises a heat exchanger to be in contact with the coolant in the second cooling circuit and a control valve configured to direct an adjustable part of the coolant in the first cooling circuit or the coolant in the third cooling circuit to a heat transmitting contact with the coolant in the second cooling line in heat exchanger. By means of such a heat exchanger and a control valve, it is possible to vary the temperature of the coolant directed to the condenser in a simple manner.

According to an embodiment of the invention, said cooling adjusting means comprises a inlet line receiving coolant from the first cooling circuit and a control valve configured to direct an adjustable first part of coolant in the inlet line to the second radiator and a remaining second part of the coolant to a bypass line leading coolant past the second radiator whereupon the first part and the second part of the coolant are mixed before the coolant enters the condenser. In this case, the second radiator is dimensioned to cool the coolant to a relative low temperature in relation to the coolant in the first radiator. If the working medium is to be cooled with a maximum cooling effect, the valve directs the entire coolant flow through the second radiator. If the working medium is to be cooled with a lower cooling effect, the valve directs a suitable first part of the coolant to the second radiator and a remaining suitable second part of the coolant flow through the bypass line.

According to an embodiment of the invention, the cooling arrangement comprises at least one sensor sensing a parameter related to the condensing pressure in the condenser. In order to achieve a thermal efficiency of an expander in a WHR-system, the condensation pressure in the condenser should be low as possible. The sensor may be a pressure sensor which senses the pressure in the condenser or in a position immediately downstream of the condenser in the WHR-circuit. Alternatively, the sensor may be a temperature sensor sensing the condensing temperature of the medium in the condenser or in a position immediately downstream of the condenser. The condensation temperature corresponds to a specific condensation pressure.

According to an embodiment of the invention, the control unit is configured to estimate a cooling of the working medium such that the working medium obtains a condensation pressure within a predetermined pressure range. By practical reasons, it is many times suitable to avoid negative pressures in a WHR-system. In this case, it is suitable to obtain a condensation pressure just above 1 bar. The predetermined pressure range may, for example, be 1, 1 - 1, 5 bar. The predetermined pressure range corresponds to a corresponding temperature range for the working medium.

According to an embodiment of the invention, the cooling arrangement comprises temperature sensors configured to sense the temperature difference of the coolant over the condenser. By means of the temperature difference of the coolant over the condenser, the coolant flow and the specific heat capacity of the coolant, it is possible to calculate the cooling effect of the working medium in the condenser. The control unit may have information about a suitable cooling effect6 during different operating conditions. In case the cooling effect is too low, the cooling adjusting means is controlled such that coolant with a lower temperature is directed to the condenser. In case the cooling effect is too high, the cooling adjusting means is controlled such that coolant with a higher temperature is directed to the condenser.

According to an embodiment of the invention, the coolant in the first cooling circuit is configured to cool a combustion engine. In this case, the coolant in the first cooling may have a first temperature within the temperature range of 90 °C- 100 °C. In this case, the first cooling circuit is an ordinary cooling system for a combustion engine in a vehicle. The coolant in third cooling circuit having the lowest coolant temperature may be configured to cool at least one medium in a cooler. The third cooling circuit may cool different kinds of mediums such as charged air in a charged air cooler, a refrigerant in an AC cooler, gearbox oil in an oil cooler and recirculating exhaust gases in an EGR cooler.

According to an embodiment of the invention, the coolants are cooled in the respective radiators by an air flow, wherein the second radiator is arranged in an upstream position of the first radiator. Thus, the coolant in the second radiator is cooled with air of a lower temperature than the coolant in the first radiator. Consequently, the coolant in the second cooling circuit is cooled to a lower temperature than the coolant in the first cooling circuit. The air flow may be ram air generated by the forward movement of the vehicle. Usually, the radiator fan is turned off when the WHR-system is activated.

According to an embodiment of the invention, the second cooling circuit comprises an inlet line receiving coolant from the first cooling circuit and a return line leading the coolant back to the first cooling circuit. In this case, the first cooling circuit and the second cooling circuit have a common coolant. The inlet line of the second cooling circuit may receive coolant from the first cooling circuit in a position substantially downstream of a pump circulating coolant in the first cooling circuit. In this case, it is possible to use one and the same pump in the first cooling circuit and in the second cooling circuit.

According to an embodiment of the invention, the third cooling circuit constitutes a separate circuit with a separate coolant in relation to the coolant in the first cooling circuit and the second cooling circuit. In this case, the third cooling circuit comprises a separate coolant which makes it is possible to accomplish a very low temperature of the coolant in the third cooling circuit.

According to an embodiment of the invention, the working medium is heated in an evaporator of the WHR-system by means of exhaust gases from a combustion engine powering the vehicle. The exhaust gases contains a lot of heat energy, which usually is supplied to the environment. By means of a WHR-system, it is possible to recover a large part of the heat energy in the exhaust gases.

According to an embodiment of the invention, the working medium in the WHR-system is ethanol. Ethanol has an evaporation temperature of about 78°C at 1 bar. It is relatively easy to accomplish a coolant temperature at a suitable level below the evaporation temperature of ethanol and cool the ethanol in a condenser to a condensation temperature just above 78°C. However, it is possible to use other working mediums such as for example R245fa. R245fa an evaporation temperature of about 15°C at 1 bar. In this case, the coolant requires an essentially lower temperature.

### BRIEF DESCRIPTION OF THE DRAWINGS

In the following preferred embodiments of the invention are described, as examples, with reference to the attached drawings, in which:
- Fig. 1: shows a first embodiment of the arrangement and
- Fig. 2: shows a second embodiment of the arrangement

### DETAILED DESCRIPTION OF A PREFERRED EMBODIMENT OF THE INVENTION

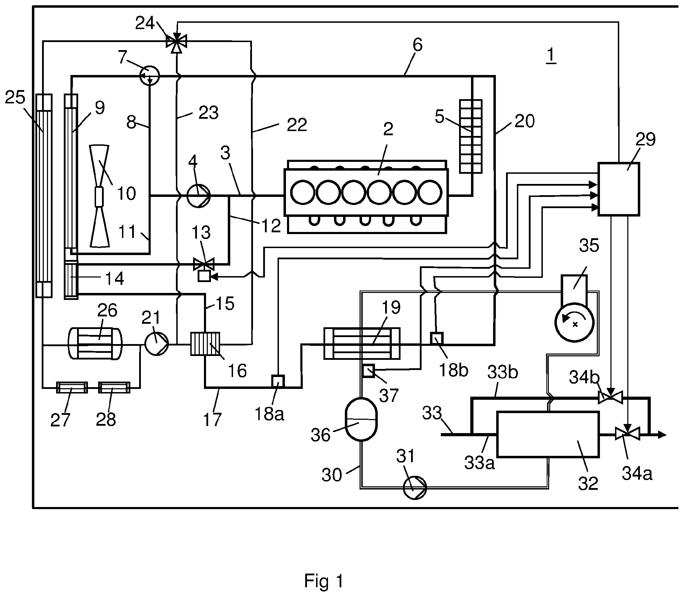

Fig. 1 shows a combustion engine 2 powering a schematically disclosed vehicle 1. The combustion engine 2 may be a diesel engine. The vehicle 1 may be a heavy vehicle. The vehicle 1 comprises a first high temperature cooling circuit. The first cooling circuit comprises an engine inlet line 3 provided with a pump 4 circulating a first coolant in the first cooling circuit. The pump 4 circulates the coolant to the combustion engine 2. When the coolant has circulated through the combustion engine 2, it is received in an engine outlet line 6 comprising a retarder cooler 5. The coolant is intended to cool oil in the retarder cooler 5 when a retarder is activated. A thermostat 7 is arranged at an end of the engine outlet line 6. In case the coolant has a lower temperature than the regulating temperature of the thermostat 7, the coolant is directed back to the pump 4 via a first return line 8. In case the coolant has a higher temperature than the regulating temperature of the thermostat 7, the coolant is directed to a first radiator 9 arranged at a front portion of the vehicle 1. The ram air and a radiator fan 10 are able to provide a cooling air flow through the first radiator 8. When the coolant has circulated through the first radiator 9, it is directed, via a second return line 11, back to the engine inlet line 3 and the pump 4.

The vehicle 1 comprises a second high temperature cooling circuit. The second cooling circuit receives, via an inlet line 12, coolant from the engine inlet line 3 of the first cooling circuit in a position downstream of the pump 4. Thus, the pump 4 is also able to circulate coolant through the second cooling circuit. The inlet line 12 comprises a control valve 13 by which the coolant flow through the inlet line 12 is regulated. The inlet line 12 directs the coolant to a second radiator 14. The second radiator 14 is arranged side by side with the first radiator 8 and close to an outlet portion of the first radiator 9. When the coolant has passed through the second radiator 14, it has been cooled in a first step in the first radiator 9 and in a second step by the second radiator 14. The coolant leaving the second radiator 14 is directed, via a radiator outlet line 15, to a heat exchanger 16. The coolant flows from the heat exchanger 16, via a condenser inlet line 17, to a condenser 19 of a WHR-system.

The condenser inlet line 17 comprises a first temperature sensor 18a arranged in condenser inlet line 17 and a second temperature sensor 18b arranged in a condenser outlet line 20. The first temperature sensor 18a senses the temperature of the coolant entering the condenser 19 and the second temperature sensor 18b senses the temperature of the coolant leaving the condenser 19. The condenser outlet line 20 directs the coolant to the engine outlet line 6 of the first coolant circuit. Thus, the condenser outlet line 20 leads the coolant back to the first cooling circuit.

The vehicle 1 comprises a third low temperature cooling circuit. The third cooling circuit comprises a pump 21. The third cooling circuit is, in a position downstream of the pump 21, branched into a cooling line 22 and a bypass line 23. The cooling line 22 comprises the heat exchanger 16 where the coolant in the third cooling circuit is intended to cool the coolant in the second cooling circuit. The third cooling circuit comprises a control valve 24 connected to the cooling line 22 and the bypass line 23. The task of the control valve 24 is to regulate the coolant flow through the cooling line 22 and the bypass line 23. When the control valve 24 is in a first position, it blocks the cooling line 22 and the entire coolant flow from the pump 21 is circulated through the bypass line 23. When the control valve 24 is in a second position, it blocks the bypass line 23 and the entire coolant flow from the pump 21 is circulated through the heat exchanging line 22. The control valve 24 can be set in a plurality of positions between the first position and the second position, in which it distributes the coolant flow from the pump 21 between the heat exchanging line 22 and the bypass line 23 in a variable manner.

The control valve 24 directs the coolant to a third radiator 25 arranged at the front portion of the vehicle 1. The third radiator 25 is arranged in an upstream position of the first radiator 9 and the second radiator 14 in view of the air flow direction defined by the radiator fan 11. Thus, the coolant in the third radiator 25 is cooled by air with a lower temperature than the coolant in the first radiator 9 and the coolant in the second radiator 14. The coolant which leaves the third radiator 25 is used to cool compressed air in a compressed air cooler 26, a refrigerant in an AC cooler 27 and gearbox oil in an oil cooler 28. A control unit 29 controls the control valve 13, and the control valve 24.

The vehicle is provided with a WHR-system (Waste Heat Recovery system). The WHR- system comprises a pump 31 which pressurized and circulates a working medium in a closed a circuit 30. In this case, the working medium is ethanol. However, it is possible to use other kinds of working mediums such as for example R245fa. The pump 31 pressurizes and circulates the working medium to an evaporator 32. The working medium is heated in the evaporator 32 by exhaust gases. The exhaust gases are supplied, via an exhaust line 33 from the combustion engine 2 to the evaporator 32. The exhaust line 33 is branched into a heat line 33a extending through the evaporator 32 and a bypass line 33b leading the exhaust gases around the evaporator 32. The exhaust flow through the heat line 33a is controlled by a first valve 34a and the exhaust flow through the bypass line 33b is controlled by a second valve 34b. The control unit 29 controls the first valve 34a and the second valve 34b and thus the exhaust flow through the evaporator 32. During most operating conditions, the entire exhaust gas flow is directed through the heat line 33a. The working medium is heated by the exhaust gases in the evaporator 32 to a temperature at which it evaporates.

The working medium is circulated from the evaporator 32 to the expander 35. The pressurised and heated working medium expands in the expander 35. The expander 35 generates a rotary motion which may be transmitted, via a suitable mechanical transmission, to a shaft of the power train of the vehicle 1. Alternatively, the expander 35 may be connected to a generator transforming mechanical energy into electrical energy. The electrical energy may be stored in a battery. After the working medium has passed through the expander 35, it is directed to the condenser 19. The working medium is cooled in the condenser 19 by the coolant in the second cooling circuit to a temperature at which it condenses. A pressure sensor 37 senses the pressure in the circuit 30 in a position immediately downstream of the condenser 19. The control unit 29 receives information from the pressure sensor of the condensation pressure in the condenser 19. The working medium is directed from the condenser 19 to a receiver 36. The pump 31 sucks working medium from the bottom of the receiver 36 ensuring that only working medium in a liquid state is supplied to the pump 31. The WHR-system makes it possible to transform thermal energy from the exhaust gases to mechanical energy or electrical energy.

During operation of the combustion engine 2, the pump 4 circulates coolant in the first cooling circuit cooling the compression engine 2. The coolant in the first cooling circuit is cooled in the first radiator 9 to a first temperature T₁. The control unit 29 controls the control valve 13 such that a suitable part of the coolant in first cooling circuit is directed into the inlet line 12 of the second cooling circuit. The coolant in the second cooling circuit, which has been cooled in a first step in the first radiator 9, is cooled in a second step in the second radiator 14. The coolant is cooled in the second radiator to a temperature T₂ which is lower than the temperature T₁ of the coolant in the first cooling circuit. The coolant in the second cooling circuit is directed, via the radiator outlet line 15, to the heat exchanger 16. The coolant flows is directed from the heat exchanger 16, via a condenser inlet line 17, to the condenser 19. The coolant in the second cooling circuit cools the working medium in the condenser 19.

The pump 21 circulates coolant in the third cooling circuit. The coolant in the third cooling circuit is cooled in the third radiator 25 by air of a lower temperature than the coolant in the first radiator 9 and the second radiator 14. Thus, the coolant in the third cooling circuit is cooled to a temperature which is significantly lower than the temperature T₂ of the coolant in the second cooling circuit. When the coolant in the third cooling circuit has cooled the mediums in the coolers 26-28, it has still a lower temperature T₃ than the temperature T₂ of the coolant in the second cooling circuit. Thus, it is possible to use the coolant in the third cooling circuit to cool the coolant in the second cooling circuit in the heat exchanger 16. The flow of the coolant in the third cooling circuit through the heat exchanger 16 is regulated by the control valve 24.

In order to achieve a high thermal efficiency in a WHR-system, the working medium in the condenser 19 is to be cooled with a cooling effect varying during different operating condition. Since the supplied heat effect to the evaporator 32 from exhaust gases varies, it is necessary to provide a variable cooling effect of the working medium in the condenser 19. It is favourable to establish a condensation pressure as low as possible at the different operating conditions. However, it is suitable to avoid negative pressure in the WHR-system by practical reasons. In view of these facts, it is suitable to provide a cooling of the working medium in the condenser 19 to a condensation pressure just above 1bar. In order to maintain a high thermal efficiency it is necessary to adjust the cooling effect of the working medium in the condenser 19 view of the supplied heat energy from the combustion engine 2 such that the condensation pressure will be just above 1 bar. The working medium ethanol has a condensation temperature of 78°C at the condensation pressure 1 bar. In this case, it is suitable to accomplish a condensation temperature of just above 78°C in the condenser 19.

The coolant in the first cooling circuit is cooled by the first radiator 9 to a temperature T₁ which is suitable for the cooling the compression engine 2. The coolant in the first cooling circuit can be cooled to a temperature T₁ within the temperature range of 90-100°C. In this case, the second radiator 14 is dimensioned to cool the coolant to a temperature T₂ within, for example, the temperature range of 60-70 °C. The control unit 29 regulates the coolant flow from the third cooling circuit through the heat exchanger 16 by means of the control valve 24. Since the coolant in the third cooling circuit has a temperature T₃ which is lower than the temperature T₂, it is possible for the control unit 29 to supply coolant to the condenser 19 with a lower temperature than T₂. The control unit regulates the coolant flow to the second cooling circuit and the condenser 19 by means of the control valve 13. The cooling effect of the working medium in the condenser 19 is related to the temperature and the flow of the coolant.

In this case, the control unit 29 is configured to maintain a condensation pressure within a pressure range of, for example, 1, 1-1, 5 bar in the condenser 19. The control unit 29 receives substantially continuously information from the pressure sensor 37 about the current condensation pressure in the condenser 19. In case, the condensation pressure is higher than 1, 5 bar, the cooling effect of the working medium in the condenser 19 is too low. In this case, the control unit 29 controls the control valve 24 such that a larger part of the coolant flow in the third cooling circuit is directed into the cooling line 22 with the heat exchanger 16 and a lesser part through the bypass line 22. Thereby, coolant with a lower temperature will enter the condenser 19. Furthermore or in combination, the control unit 29 can regulate the control valve 13 such a larger coolant flow is directed into the second cooling circuit and to the condenser 19. Furthermore, the control unit 29 receives information from the temperature sensors 18a, 18b about the temperature rise of the coolant when it cools the working medium in the condenser 19. The control unit 26 is able to calculate the cooling effect in the condenser 19 with information of the temperature drop of the coolant in the condenser 19, the coolant flow through the condenser 19 and the specific heat capacity of the working medium.

In case, the control unit 29 receives information indicating that the condensation pressure is lower than 1, 1 bar, there is a risk of negative pressure in the WHR-system. In this case, the control unit 29 controls the control member 24 such that a smaller part of the coolant in the third cooling circuit is directed to the cooling line 23 and the heat exchanger 16 and a larger part of the coolant in the third cooling circuit is directed to the bypass line 22. Thereby, coolant with a higher temperature will enter the condenser 19. Furthermore or in combination, the control unit may regulate the control valve 13 such a smaller coolant flow is directed into the second cooling circuit and to the condenser 19. Since the control unit 29 is able to regulate the temperature of the coolant to the condenser 19 by the control valve 13 and the coolant flow to the condenser 19 by the control valve 24, it is possible to vary the cooling effect of the working medium in the condenser 19 in a simple and quick manner.

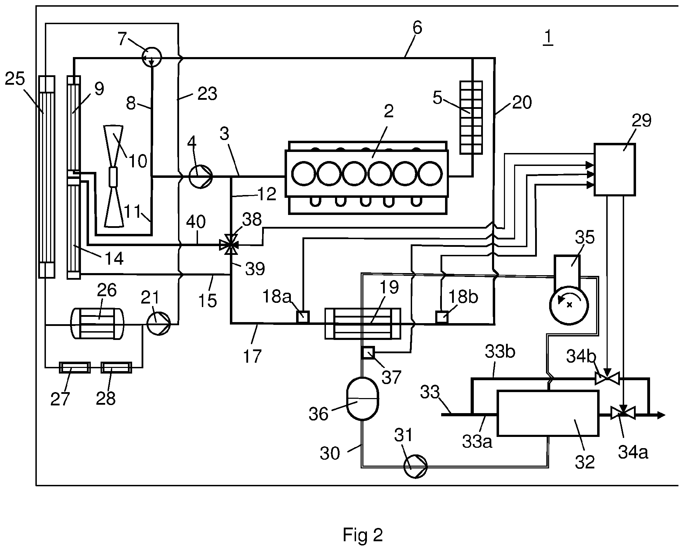

Fig 2 shows an alternative embodiment of the cooling arrangement. The cooling arrangement comprises also in this case three cooling circuits each comprising a radiators 9, 14, 25. The first cooling circuit is unchanged compared to the embodiment shown in Fig. 1. The second cooling circuit comprises a larger second radiator 14 than in the embodiment in Fig. 1. Thus, it is possible to cool the coolant in the second radiator to 14 a lower temperature T₂ than in the embodiment in Fig. 1. The second cooling circuit receives coolant in an inlet line 12 from the engine inlet line 3 of the first cooling circuit in a position downstream of the pump 4. The inlet line 12 comprises a control valve 38 which receives the coolant flow in the inlet line 12. The valve 38 is configured to direct a first part of the coolant flow past the second radiator 14 to a bypass line 39 and a second part of the coolant flow to a radiator inlet line 40 and to the second radiator 14. The control valve 38 can distribute the coolant flow to the bypass line 39 and the radiator inlet line 40 in a step-less manner. The first part of the coolant has the higher temperature T₁ and the second part of the coolant has the lower temperature T₂. The first part of the coolant and the second part of the coolant is mixed in the condenser inlet line 17. In this case, it is not necessary to use the coolant in the third cooling circuit.

The control unit 29 is also in this case configured to maintain a condensation pressure within a pressure range of, for example, 1,1-1,5 bar. The control unit 29 receives substantially continuously information from the pressure sensor 37 about the condensation pressure in the condenser 19. In case, the condensation pressure is higher than 1, 5 bar, the cooling effect of the working medium in the condenser 19 is too low. In this case, the control unit 29 regulates the control valve 38 such that the radiator inlet line 40 receives a larger part of the coolant flow in the inlet line 12 and the bypass line 39 receives a lesser part of the coolant flow in the inlet line 12. Thereby, an increased part of the coolant flow in the inlet line 12 is cooled in the second radiator 14 to the lower temperature T₂ at the same time as a decreased part of the coolant flow is directed to the bypass line 39 with the higher temperature T₁. The mixed coolant in the inlet line 17 to the condenser 19 obtains a lower temperature resulting in a higher cooling effect of the working medium in the condenser 19. The higher cooling effect of the working medium in the condenser 19 results in a lower condensation pressure in the condenser 19.

In case, the control unit 29 receives information indicating that the condensation pressure is lower than 1, 1 bar, there is a risk of negative pressure in the WHR-system. In this case, the control unit 29 regulates the control valve 38 such that the radiator inlet line 40 receives a smaller part of the coolant flow from the inlet line 12 and the bypass line 39 a larger part of the coolant flow from the inlet line 12. Thereby, a decreased part of the coolant flow is cooled in the second radiator 14 to the lower temperature T₂ at the same time as an increased part of the coolant flow is directed to the bypass line 39 with the higher temperature T₁. The mixed coolant in the inlet line 17 to the condenser 19 obtains a higher temperature resulting in a lower cooling effect of the working medium in the condenser 19. The lower cooling effect of the working medium in the condenser 19 results in a higher condensation pressure. Since the control unit 29 is able to regulate the temperature of the coolant to the condenser 19 by the control valve 38, it is possible to vary the cooling effect of the working medium in the condenser 19 in a simple and quick manner. It may also be possible to provide a control valve 38 which is able to adjust the coolant flow from the first cooling system to the inlet line 12 of the second cooling portion. In this case, it is also possible to vary the coolant flow to the condenser 19.

The invention is not restricted to the described embodiment but may be varied freely within the scope of the claims.

## Claims

1. Cooling arrangement for a WHR-system in a vehicle, wherein the cooling system comprises a first cooling circuit including a first radiator (9) in which a circulating coolant is cooled to a first temperature (T₁), a second cooling circuit including a second radiator (14) in which a circulating coolant is cooled to a second temperature (T₂) which is lower than the first temperature (T₁), and a third cooling circuit including a third radiator (25) in which the coolant is cooled to a third temperature (T₃) which is lower than the second temperature (T₂), **characterised in that** the cooling arrangement comprises a condenser inlet line (17) directing coolant from the second radiator (14) to a condenser (19) of the WHR-system where the coolant cools a working medium of the WHR-system and cooling adjusting means (13, 16, 24, 38) by which it is possible to adjust the temperature and/or the flow of the coolant in the second cooling circuit to the condenser (19) by means of coolant in the first cooling circuit and/or the coolant in the third cooling circuit, a sensor (37) sensing a parameter related to the cooling of the working medium in the condenser (19), and a control unit (29) configured to receive information about said parameter, to estimate a suitable cooling of the working medium in the condenser and to control the cooling adjusting means (13, 16, 24, 38) such that the coolant in the condenser inlet line (17) provides said estimated cooling of the working medium in the condenser (19).

2. Cooling arrangement according to claim 1, **characterised in that** said cooling adjusting means comprises a heat exchanger (16) to be in contact with the coolant in the second cooling circuit and a control valve (24) configured to direct an adjustable part of the coolant in the first cooling circuit or the third cooling circuit to a heat transmitting contact with the coolant in the second cooling circuit in heat exchanger (16).

3. Cooling arrangement according claim 1, **characterised in that** said cooling adjusting means comprises a inlet line (12) receiving coolant from the first cooling circuit and a control valve (38) configured to direct an adjustable first part of coolant in the inlet line (12) to the second radiator (14) and a remaining second part of the coolant to a bypass line (39) leading coolant past the second radiator (14) whereupon the first part and the second part of the coolant are mixed before the coolant enters the condenser (19).

4. Cooling arrangement according to any one of the preceding claims, **characterised in that** said sensor (37) is sensing a parameter related to the condensing pressure in the condenser (19).

5. Cooling arrangement according to claim 4, **characterised in that** the control unit is configured to estimate a cooling of the working medium such that the working medium obtains a condensation pressure within a predetermined pressure range.

6. Cooling arrangement according to any one of the preceding claims, **characterised in that** it comprises temperature sensors (18a, 18b) configured to sense the temperature difference of the coolant over the condenser (19).

7. Cooling arrangement according to any one of the preceding claims, **characterised in that** the coolant in the first cooling circuit is configured to cool a combustion engine (2).

8. Cooling arrangement according to any one of the preceding claims, **characterised in that** the coolant in the third cooling circuit is configured to cool a medium in at least one cooler (26-28).

9. Cooling arrangement according to any one of the preceding claims, **characterised in that** the coolant in the respective radiators (9, 14, 25) is cooled by an air flow, wherein the third radiator (25) is arranged upstream of the first radiator (9) and the second radiator (14) in view of the air flow direction through the radiators (9, 14, 25).

10. Cooling arrangement according to claim 8, **characterised in that** the second radiator (14) and the first radiator (9) are arranged side by side in a common plane and that the coolant in the second cooling circuit is cooled in a first step in the first radiator (9) and in a second step in the second radiator (14).

11. Cooling arrangement according to any one of the preceding claims, **characterised in that** the second cooling circuit comprises an inlet line (12) receiving coolant from the first cooling circuit and a return line (20) leading the coolant back to the first cooling circuit.

12. Cooling arrangement according to claim 11, **characterised in that** the inlet line (12) of the second cooling circuit receives coolant from the first cooling circuit in a position substantially downstream of a pump (4) circulating coolant in the first cooling circuit.

13. Cooling arrangement according to any one of the preceding claims, **characterised in that** third cooling circuit constitutes a separate circuit with a separate coolant in relation to the coolant in the first cooling circuit and the second cooling circuit.

14. Cooling arrangement according to any one of the preceding claims, **characterised in that** the working medium is heated in an evaporator of the WHR-system by means of exhaust gases from a combustion engine (2) powering the vehicle (1).

15. Cooling arrangement according to any one of the preceding claims, **characterised in that** the working medium in the WHR-system is ethanol.

## Patentansprüche

1. Kühlanordnung für ein Wärmerückgewinnungssystem in einem Fahrzeug, wobei das Kühlsystem einen ersten Kühlkreis mit einem ersten Kühler (9), in dem ein zirkulierendes Kühlmittel auf eine erste Temperatur (T₁) gekühlt wird, einen zweiten Kühlkreis mit einem zweiten Kühler (14), in dem ein zirkulierendes Kühlmittel auf eine zweite Temperatur (T₂) gekühlt wird, die niedriger als die erste Temperatur (T₁) ist, und einen dritten Kühlkreis mit einem dritten Kühler (25) aufweist, in dem das Kühlmittel auf eine dritte Temperatur (T₃) gekühlt wird, die niedriger als die zweite Temperatur (T₂) ist,
**dadurch gekennzeichnet, dass** die Kühlanordnung eine Kondensatoreinlassleitung (17), die Kühlmittel aus dem zweiten Kühler (14) zu einem Kondensator (19) des Abwärmerückgewinnungssystems leitet, wo das Kühlmittel ein Arbeitsmedium des Wärmerückgewinnungssystems kühlt, und eine Kühlungseinstelleinrichtung (13, 16, 24, 38), mit der es möglich ist, die Temperatur und/oder den Strom des Kühlmittels in dem zweiten Kühlkreis zum Kondensator (19) einzustellen mithilfe von Kühlmittel in dem ersten Kühlkreis und/oder dem Kühlmittel in dem dritten Kühlkreis, einen Sensor (37), der einen die Kühlung des Arbeitsmediums in dem Kondensator (19) betreffenden Parameter erfasst, und eine Steuereinheit (29) aufweist, die dazu eingerichtet ist, Information über diesen Parameter zu empfangen, um eine geeignete Kühlung des Arbeitsmediums in dem Kondensator abzuschätzen und die Kühlungseinstelleinrichtung (13, 16, 24, 38) so zu steuern, dass das Kühlmittel in der Kondensatoreinlassleitung (17) die abgeschätzte Kühlung des Arbeitsmediums in dem Kondensator (19) liefert.

2. Kühlanordnung nach Anspruch 1,
**dadurch gekennzeichnet, dass** die Kühlungseinstelleinrichtung einen Wärmetauscher (16) zum in Kontakt stehen mit dem Kühlmittel in dem zweiten Kühlkreis und ein Steuerventil (24) aufweist, das dazu eingerichtet ist, einen einstellbaren Teil des Kühlmittels in dem ersten Kühlkreis oder dem dritten Kühlkreis in einen wärmeübertragenden Kontakt mit dem Kühlmittel in dem zweiten Kühlkreis im Wärmetauscher (16) zu leiten.

3. Kühlanordnung nach Anspruch 1,
**dadurch gekennzeichnet, dass** die Kühlungseinstelleinrichtung eine Einlassleitung (12), die Kühlmittel aus dem ersten Kühlkreis empfängt, und ein Steuerventil (38) aufweist, das dazu eingerichtet ist, einen einstellbaren ersten Teil von Kühlmittel in der Einlassleitung (12) zum zweiten Kühler (14) und einen verbleibenden zweiten Teil des Kühlmittels zu einer Bypassleitung (39) zu leiten, die Kühlmittel am zweiten Kühler (14) vorbei führt, woraufhin der erste Teil und der zweite Teil des Kühlmittels vermischt werden, bevor das Kühlmittel in den Kondensator (19) eintritt.

4. Kühlanordnung nach einem der vorhergehenden Ansprüche,
**dadurch gekennzeichnet, dass** der Sensor (37) einen den Kondensationsdruck im Kondensator (19) betreffenden Parameter erfasst.

5. Kühlanordnung nach Anspruch 4,
**dadurch gekennzeichnet, dass** die Steuereinheit dazu eingerichtet ist, eine Kühlung des Arbeitsmediums so abzuschätzen, dass das Arbeitsmedium einen Kondensationsdruck innerhalb eines vorbestimmten Druckbereichs erreicht.

6. Kühlanordnung nach einem der vorhergehenden Ansprüche,
**dadurch gekennzeichnet, dass** sie Temperatursensoren (18a, 18b) aufweist, die dazu eingerichtet sind, den Temperaturunterschied des Kühlmittels über den Kondensator (19) zu erfassen.

7. Kühlanordnung nach einem der vorhergehenden Ansprüche,
**dadurch gekennzeichnet, dass** das Kühlmittel in dem ersten Kühlkreis dazu eingerichtet ist, einen Verbrennungsmotor (2) zu kühlen.

8. Kühlanordnung nach einem der vorhergehenden Ansprüche,
**dadurch gekennzeichnet, dass** das Kühlmittel in dem dritten Kühlkreis dazu eingerichtet ist, ein Medium in mindestens einer Kühleinrichtung (26-28) zu kühlen.

9. Kühlanordnung nach einem der vorhergehenden Ansprüche,
**dadurch gekennzeichnet, dass** das Kühlmittel in den jeweiligen Kühlern (9, 14, 25) durch einen Luftstrom gekühlt wird, wobei der dritte Kühler (25) bezüglich der Luftstromrichtung durch die Kühler (9, 14, 25) stromaufwärts des ersten Kühlers (9) und des zweiten Kühlers (14) angeordnet ist.

10. Kühlanordnung nach Anspruch 8,
**dadurch gekennzeichnet, dass** der zweite Kühler (14) und der erste Kühler (9) in einer gemeinsamen Ebene nebeneinander angeordnet sind und dass das Kühlmittel in dem zweiten Kühlkreis in einem ersten Schritt in dem ersten Kühler (9) und in einem zweiten Schritt in dem zweiten Kühler (14) gekühlt wird.

11. Kühlanordnung nach einem der vorhergehenden Ansprüche,
**dadurch gekennzeichnet, dass** der zweite Kühlkreis eine Einlassleitung (12), die Kühlmittel aus dem ersten Kühlkreis empfängt, und eine Rückführleitung (20) aufweist, die das Kühlmittel zum ersten Kühlkreis zurück leitet.

12. Kühlanordnung nach Anspruch 11,
**dadurch gekennzeichnet, dass** die Einlassleitung (12) des zweiten Kühlkreises Kühlmittel aus dem ersten Kühlkreis an einer Stelle im Wesentlichen stromabwärts einer Pumpe (4) empfängt, die Kühlmittel in dem ersten Kühlkreis umwälzt.

13. Kühlanordnung nach einem der vorhergehenden Ansprüche,
**dadurch gekennzeichnet, dass** der dritte Kühlkreis ein getrennter Kreis ist mit einem bezüglich des Kühlmittels in dem ersten Kühlkreis und dem zweiten Kühlkreis getrennten Kühlmittel.

14. Kühlanordnung nach einem der vorhergehenden Ansprüche,
**dadurch gekennzeichnet, dass** das Arbeitsmedium in einem Verdampfer des Wärmerückgewinnungssystems mittels Abgasen von einem das Fahrzeug (1) antreibenden Verbrennungsmotor (2) beheizt wird.

15. Kühlanordnung nach einem der vorhergehenden Ansprüche,
**dadurch gekennzeichnet, dass** das Arbeitsmedium in dem Wärmerückgewinnungssystem Ethanol ist.

## Revendications

1. Agencement de refroidissement pour un système WHR dans un véhicule, dans lequel le système de refroidissement comprend un premier circuit de refroidissement comprenant un premier radiateur (9) dans lequel un liquide de refroidissement circulant est refroidi à une première température (T₁), un deuxième circuit de refroidissement comprenant un deuxième radiateur (14) dans lequel un liquide de refroidissement circulant est refroidi à une deuxième température (T₂) qui est inférieure à la première température (T₁) et un troisième circuit de refroidissement comprenant un troisième radiateur (25) dans lequel le liquide de refroidissement est refroidi à une troisième température (T₃) qui est inférieure à la deuxième température (T₂), caractérisé en que l'agencement de refroidissement comprend un collecteur d'admission du condenseur (17) conduisant le liquide de refroidissement du deuxième radiateur (14) vers un condenseur (19) du système WHR où le liquide de refroidissement refroidit un milieu de travail du système WHR et des moyens de réglage de refroidissement (13, 16, 24, 38) par lesquels il est possible d'ajuster la température et/ ou le débit du liquide de refroidissement dans le deuxième circuit de refroidissement vers le condenseur (19) au moyen d'un liquide de refroidissement dans le premier circuit de refroidissement et/ ou du circuit de refroidissement dans le troisième circuit de refroidissement, un capteur (37) détectant un paramètre lié au refroidissement du fluide de travail dans le condenseur (19), et une unité de commande (29) configurée pour recevoir des informations sur ledit paramètre, pour estimer un refroidissement approprié du fluide de travail dans le condenseur et pour commander les moyens de réglage de refroidissement (13, 16, 24, 38) de sorte que le liquide de réfrigération dans le collecteur d'admission du condenseur (17) assure ledit refroidissement estimé du fluide de travail dans le condenseur (19).

2. Agencement de refroidissement selon la revendication 1, **caractérisé en ce que** ledit moyen de réglage de refroidissement comprend un échangeur de chaleur (16) pour être en contact avec le liquide de refroidissement dans le deuxième circuit de refroidissement et une vanne de commande (24) configurée pour diriger une partie réglable du liquide de refroidissement dans le premier circuit de refroidissement ou dans le troisième circuit de refroidissement vers un contact de transmission de chaleur avec le liquide de refroidissement dans le deuxième circuit de refroidissement dans l'échangeur de chaleur (16).

3. Agencement de refroidissement selon la revendication 1, **caractérisé en ce que** ledit moyen d'ajustement de refroidissement comprend un collecteur d'admission (12) recevant du liquide de refroidissement du premier circuit de refroidissement et une vanne de commande (38) configurée pour diriger une première partie réglable du liquide de refroidissement dans le collecteur d'admission (12) vers le deuxième radiateur (14) et à une deuxième partie restante du liquide de refroidissement vers une conduite de dérivation (39) conduisant le liquide de refroidissement au-delà du deuxième radiateur (14), après quoi la première partie et la deuxième partie du liquide de refroidissement sont mélangées avant que le liquide de refroidissement n'entre dans le condenseur (19).

4. Agencement de refroidissement selon l'une quelconque des revendications précédentes, **caractérisé en ce que** ledit capteur (37) détecte un paramètre lié à la pression de condensation dans le condenseur (19).

5. Agencement de refroidissement selon la revendication 4, **caractérisé en ce que** l'unité de commande est configurée pour estimer un refroidissement du fluide de travail de sorte que le milieu de travail obtient une pression de condensation dans une plage de pression prédéterminée.

6. Agencement de refroidissement selon l'une quelconque des revendications précédentes, **caractérisé en ce qu'**il comprend des capteurs de température (18a, 18b) configurés pour détecter la différence de température du liquide de refroidissement sur le condenseur (19).

7. Agencement de refroidissement selon l'une quelconque des revendications précédentes, **caractérisé en ce que** le liquide de refroidissement dans le premier circuit de refroidissement est configuré pour refroidir un moteur à combustion (2).

8. Agencement de refroidissement selon l'une quelconque des revendications précédentes, **caractérisé en ce que** le liquide de refroidissement dans le troisième circuit de refroidissement est configuré pour refroidir un liquide dans au moins un refroidisseur (26-28).

9. Agencement de refroidissement selon l'une quelconque des revendications précédentes, **caractérisé en ce que** le liquide de refroidissement dans les radiateurs respectifs (9, 14, 25) est refroidi par un flux d'air, dans lequel le troisième radiateur (25) est agencé en amont du premier radiateur (9) et du deuxième radiateur (14) en vue de la direction du flux d'air à travers les radiateurs (9, 14, 25).

10. Agencement de refroidissement selon la revendication 8, **caractérisé en ce que** le deuxième radiateur (14) et le premier radiateur (9) sont agencés côte à côte dans un plan commun et **en ce que** le liquide de refroidissement dans le deuxième circuit de refroidissement est refroidi dans une première étape dans le premier radiateur (9) et dans une deuxième étape dans le deuxième radiateur (14).

11. Agencement de refroidissement selon l'une quelconque des revendications précédentes, **caractérisé en ce que** le deuxième circuit de refroidissement comprend un collecteur d'admission (12) recevant le liquide de refroidissement du premier circuit de refroidissement et une conduite de retour (20) conduisant le liquide de refroidissement de retour dans le premier circuit de refroidissement.

12. Agencement de refroidissement selon la revendication 11, **caractérisé en ce que** le collecteur d'admission (12) du deuxième circuit de refroidissement reçoit le liquide de refroidissement du premier circuit de refroidissement dans une position sensiblement en aval d'une pompe (4) de circulation du liquide de refroidissement dans le premier circuit de refroidissement.

13. Agencement selon l'une quelconque des revendications précédentes, caractérisé en ce que le troisième circuit de refroidissement constitue un circuit séparé avec un liquide refroidissement en relation avec le liquide de refroidissement dans le premier circuit de refroidissement et dans le deuxième circuit de refroidissement.

14. Agencement de refroidissement selon l'une quelconque des revendications précédentes, **caractérisé en ce que** le liquide de travail est chauffé dans un évaporateur du système WHR au moyen de gaz d'échappement provenant d'un moteur à combustion (2) alimentant le véhicule (1).

15. Agencement de refroidissement selon l'une quelconque des revendications précédentes, **caractérisé en ce que** le liquide de travail dans le système WHR est de l'éthanol.
